# DEMANDE DE BREVET EUROPEEN

(11) **EP 4 187 732 A1**
(43) Date de publication de la demande: **31.05.2023**
(21) Numéro de dépôt: 22206284.6
(22) Date de dépôt: 09.11.2022
(51) Int. Cl.: H02G 3/12

(54) **DISPOSITIF DE PRE-POSITIONNEMENT DE BOITE D'ENCASTREMENT DANS UNE CLOISON OU UN FAUX-PLAFOND**

(30) Priorité: 25.11.2021 FR 2112539
(71) Demandeur: Son, Sombona, 74500 Neuvecelle (FR)
(72) Inventeur: Son, Sombona, 74500 Neuvecelle (FR)
(74) Mandataire: Croonenbroek, Thomas Jakob

(57) **Abrégé**

L'invention concerne un dispositif de pré-positionnement (1) d'une ou de plusieurs boîtes d'encastrement (45) dans une cloison sèche (41) ou un faux-plafond, comprenant au moins une réglette (3), au moins un gabarit (7) et un organe de maintien (13) destiné à coopérer avec un montant profilé (25, 63, 65) mis en place pour le montage de la cloison sèche (41) ou un faux-plafond, ladite réglette (3) étant pourvue de repères de fixation (5) dudit au moins un gabarit (7), ledit au moins un gabarit (7) comprenant une lumière (10) configurée pour recevoir une boîte d'encastrement (45) et comprenant un organe de fixation (43) à ladite au moins une réglette (3).

## Description

L'invention concerne un dispositif de pré-positionnement d'une ou de plusieurs boîtes d'encastrement dans une cloison, notamment dans une cloison sèche ou un faux-plafond.

Le montage d'une cloison sèche ou d'un faux-plafond se déroule en plusieurs étapes au cours desquels différents corps de métier interviennent les uns à la suite des autres, et des fois à plusieurs moments différents. C'est notamment le cas pour l'équipement électrique des cloisons sèches et des faux-plafonds. En effet, les électriciens doivent intervenir dans les premières étapes de montage des cloisons et des faux-plafonds ainsi qu'en toute fin suite à leur fermeture. Cette temporalité entraîne des difficultés de mise en œuvre.

Les électriciens effectuent en premier lieu des incorporations dans le but a *posteriori* d'alimenter et de commander différents dispositifs ou systèmes électriques. Au cours de cette étape, très fastidieuse et imprécise, des gaines pré-filées et des câbles électriques sont tirés d'un point à un autre en vue d'incorporer et de préparer le câblage d'une installation électrique, cette dernière n'étant mise en place que dans les toutes dernières étapes du montage de la cloison ou du faux-plafond. Au niveau du futur emplacement prévu pour un appareillage électrique, tel qu'interrupteur, une prise, un point lumineux ou autres, les gaines pré-filées et les câbles électriques sont rassemblés grossièrement à l'aide d'adhésifs ou de bouts de fil. Cet ensemble est ensuite fixé approximativement au niveau du futur emplacement avec des rubans adhésifs sur les isolants de la cloison ou du faux-plafond déjà montés afin de pouvoir les récupérer postérieurement à la pose de plaques de plâtre fermant la cloison.

Suite à ce pré-positionnement des gaines et des câbles, différents corps de métier interviennent pour poursuivre le montage de la cloison ou du faux-plafond. Les électriciens reviennent en toute fin, après la pose des plaques de plâtres afin de mettre en place les appareillages électriques et finaliser l'installation. Pour cette étape, un électricien va procéder au perçage à l'aide d'une scie trépan, de 67 mm de diamètre, de la plaque de plâtre disposée au niveau du futur emplacement afin d'atteindre les gaines et câbles pré-positionnés derrière. Il va ensuite mettre en place une boîte d'encastrement à ce niveau de laquelle est monté alors un appareillage électrique branché aux câbles électriques. Il procède alors à la vérification de la fonctionnalité de l'installation électrique.

Malheureusement, il n'est pas rare que l'intervention des autres corps de métier avant le retour des électriciens endommage la préparation. Notamment, il arrive régulièrement que les adhésifs se décollent en présence des poussières, que les gaines soient déplacées de leur pré-positionnement, voire qu'elles tombent par terre. Dès lors, au moment du perçage pour les récupérer, ces dernières ne sont plus en place. Il est alors nécessaire de démonter les plaques de plâtre en pose murale ou en faux-plafond pour rechercher ces gaines ou de percer plusieurs trous dans les plaques de plâtre. Il arrive également que les gaines ne soient pas retrouvées, ce qui entraine alors des travaux complémentaires impliquant la repose des plaques de plâtre et le rebouchage des trous avec pose d'un enduit.

Un autre problème provient du diamètre du trou percé dans la plaque de plâtre, 67 millimètres, qui rend impossible l'introduction d'une main humaine à l'intérieur afin de récupérer les gaines et les câbles. A cet effet, il est couramment utilisé un crochet improvisé dont l'efficacité est hasardeuse.

Enfin, le test de l'installation électrique ne peut être réalisé qu'en toute fin, ce qui implique des travaux très complexes, voire impossible, si un défaut de connexion est constaté.

Aussi, la présente invention vise à pallier les inconvénients de l'art antérieur en proposant une solution qui assure de la présence des gaines et câbles pré-positionnés, qui diminue, voire qui enlève, la dépendance d'un électricien aux autres corps de métier intervenant sur le montage d'une cloison ou d'un faux-plafond et qui diminue le temps de mise en place de l'installation électrique.

A cet effet, l'invention a pour objet un dispositif de pré-positionnement d'une ou de plusieurs boîtes d'encastrement dans une cloison sèche ou d'un faux-plafond, comprenant au moins une réglette, au moins un gabarit et un organe de maintien destiné à coopérer avec un montant profilé mis en place pour le montage de la cloison sèche ou d'un faux-plafond, ladite réglette étant pourvue de repères de fixation dudit au moins un gabarit, ledit au moins un gabarit comprenant une lumière configurée pour recevoir une boîte d'encastrement et comprenant un organe de fixation à ladite au moins une réglette.

Le dispositif de pré-positionnement selon l'invention permet avantageusement de positionner selon deux directions perpendiculaires un ou plusieurs gabarits destinés à recevoir chacun une boîte d'encastrement. Ainsi, les repères de fixation de la ou des réglettes permettent de les disposer selon une première direction, et l'organe de maintien de par sa fixation à un montant profilé, de les disposer selon une seconde direction. On peut ainsi placer très précisément le ou les gabarits au niveau de la cloison ou du faux-plafond et y installer les boîtes d'encastrement dès la première intervention de l'électricien lors du montage d'une cloison sèche ou d'un faux-plafond. Les câbles et gaines sont donc disposés, attachés aux boîtes d'encastrement, les différents câblages peuvent être réalisés provisoirement (ceci afin de permettre la mise sous tension et de tester l'installation) avant même la fermeture de la cloison ou du faux-plafond, boîtes d'encastrement qui vont recevoir le ou les appareillages électriques auxquels ils seront raccordés. Ils ne sont donc plus rassemblés à un emplacement provisoire à l'aide de moyens de fortune comme c'est le cas dans l'art antérieur. Le dispositif de pré-positionnement selon l'invention permet ainsi de gagner du temps de mise en place de l'installation électrique et diminue très fortement, voire annule, le risque de perte des gaines et câbles électriques. En outre, le test de fonctionnalité électrique peut directement être réalisé lors de cette étape, ce qui assure un gain de temps supplémentaire et diminue, voire évite, la découverte de problèmes de connexion électrique lors de la finalisation de l'installation électrique.

Les repères de fixation de la ou des réglettes permettent notamment à un électricien de rapidement positionner le gabarit ou les gabarits selon les normes de distance par rapport au sol et au flanc de la cloison mais également entre les appareillages électriques lorsque plusieurs boîtes d'encastrement sont présentes. Ces repères peuvent prendre n'importe quelle forme, et notamment se présenter sous la forme de picots ou de saillies espacées régulièrement.

Ledit au moins un gabarit comprend notamment un corps d'attache duquel s'étend au moins une aile de fixation pour sa fixation à ladite au moins une réglette. Le gabarit comprend une face de coopération avec une plaque de plâtre répartie sur le corps et ladite au moins une aile de fixation. Ladite au moins une aile de fixation porte l'organe de fixation.

Selon un mode de réalisation préféré de l'invention, l'organe de fixation dudit au moins un gabarit se présente sous la forme de pions insérés dans des orifices de ladite au moins une réglette. Ainsi, la fixation d'un gabarit à la réglette est réalisée par clippage et les orifices de la réglette correspondent aux repères de fixation. Les pions sont notamment maintenus dans les orifices par force de friction. Les dits orifices peuvent correspondre à des trous borgnes ou des trous débouchant.

Alternativement, l'organe de fixation dudit au moins un gabarit se présente sous la forme d'agrafes insérées dans lesdits orifices de ladite au moins une réglette.

Alternativement, l'organe de fixation peut être une attache de type Velcro^{®}.

Le dispositif de pré-positionnement selon l'invention peut comprendre deux réglettes et ledit au moins un gabarit est fixé aux réglettes deux ailes de fixation s'étendant depuis deux côtés opposées du corps.

Le corps du gabarit est percé d'une lumière apte à recevoir une boîte d'encastrement qui y sera fixée. La lumière du gabarit peut prendre n'importe quelle forme. A cet effet, elle peut se présenter sous la forme d'un disque ou avoir une forme oblongue notamment disposée horizontalement ou verticalement une fois le dispositif de pré-positionnement monté dans une cloison sèche. La boîte d'encastrement peut être configurée pour recevoir un ou plusieurs appareillages électriques.

Par « montant profilé », on entend dans l'invention un fourreau métallique ouvert, une fourrure ou un rail. Dans l'invention, un montant profilé correspond aussi bien à un élément constituant l'ossature d'une cloison sèche qu'à celle d'un faux-plafond. Le montant profilé est ainsi pourvu d'une ouverture longitudinale, d'une paroi longitudinale de fond et deux parois longitudinales latérales disposées perpendiculairement à la paroi de fond. Chaque paroi latérale présente notamment un bord relevé s'étendant parallèlement à la paroi de fond.

L'organe de maintien permet de positionner le ou les gabarits selon la seconde direction. L'organe de maintien est notamment configuré pour se fixer à un montant profilé par force de friction. En ce sens, l'encombrement de l'organe de maintien est supérieur à la distance entre les deux parois latérales du montant profilé. L'organe de maintien peut être fixé aux bords relevés des parois latérales du montant profilé, notamment par clippage.

Selon un mode de réalisation de l'invention, l'organe de maintien est un coulisseau déplaçable en translation dans le montant. Cet aspect de l'invention, permet un ajustement rapide et précis de la position du ou des gabarits selon la seconde direction, qui ne nécessite pas de démonter et de remonter l'organe de maintien au montant profilé pour ajuster la position du ou des gabarits selon la seconde direction. Bien entendu, l'homme du métier sera considéré le matériau permettant d'obtenir des forces de friction contre les parois du montant profilé et un glissement contre ces parois. Le coulisseau est notamment réalisé dans un matériau plastique.

En particulier le coulisseau comprend deux faces latérales pourvues chacune d'un rail de guidage disposé dans le sens du mouvement de translation, et notamment dans la direction longitudinale du coulisseau. Ces rails de guidage sont destinés à être fixés aux bords relevés des parois latérales du montant profilé. L'insertion du coulisseau dans le montant peut être réalisé par écartement des parois latérales du montant profilé et clippage des deux rails de guidage au niveau des bords relevés des parois latérales.

L'organe de maintien est notamment pourvu de bords arrondis afin de faciliter son insertion et sa sortie du montant profilé. Les faces latérales peuvent comprendre une partie biseautée en direction la face cachée afin de faciliter l'insertion de l'organe de maintien dans le montant profilé. La surface de la face d'attache est ainsi supérieure à la surface de la face cachée. En outre, la partie des faces latérales portant le rail de guidage peut être perpendiculaire à la face d'attache.

L'organe de maintien comprend notamment une face d'attache et une face cachée opposée parallèles entre elles et destinées à être disposées chacune selon un plan parallèle à la paroi de fond du montant profilé. La face cachée est destinée à être disposée en regard de la paroi de fond du montant profilé. La face d'attache de l'organe de maintien peut être directement fixée à ladite ou lesdits réglettes ou par l'intermédiaire d'un organe de liaison décrit ci-après. La fixation de la ou des réglettes et/ou de l'organe de liaison à la face d'attache de l'organe de maintien ainsi que la fixation de l'organe de liaison à la ou les réglettes peut se faire par tout moyen, fonction notamment des matériaux utilisés pour chacun de ces éléments. Elle peut en particulier être réalisée par collage ou par soudage. Alternativement, l'organe de maintien est venu de matière avec la réglette. En outre, l'organe de liaison peut être pourvu de pions s'insérant dans des orifices de la ou des réglettes. Lesdits orifices peuvent correspondre aux repères de fixation décrits précédemment.

Bien entendu, lorsque plusieurs réglettes sont présentes, l'organe de maintien peut se présenter en plusieurs parties, chacune indépendante et liée à une ou plusieurs réglettes. Il en va de même pour l'organe de liaison.

Selon un mode de réalisation de l'invention, le dispositif de pré-positionnement selon l'invention comprend en outre un organe de liaison de ladite au moins une réglette à l'organe de maintien. Cet organe de liaison permet de renforcer la fixation de ladite au moins une réglette à l'organe de maintien ou de déporter la réglette de l'organe de maintien. Notamment, l'organe de maintien et la réglette sont venus de matière avec l'organe de liaison.

Notamment, selon un mode de réalisation de l'invention, l'organe de maintien comprenant une face d'attache, l'organe de liaison peut être configuré pour fixer ladite au moins une réglette en regard de la face d'attache de l'organe de liaison ou pour renforcer la fixation de ladite au moins une réglette en regard de la face d'attache de l'organe de liaison. Ce mode de réalisation est particulièrement adapté pour monter le dispositif de pré-positionnement selon l'invention sur un montant profilé dont l'ouverture longitudinale est disposée en regard de l'intérieur de la cloison sèche. C'est notamment le cas des rails supérieurs et inférieurs et des montants intermédiaires. Dans cet aspect de l'invention, la réglette est fixée selon son axe longitudinal dans une direction perpendiculaire au plan de la face d'attache, et ainsi perpendiculaire à la paroi de fond du montant profilé. L'organe de liaison peut être notamment sous la forme d'un prisme triangulaire droit.

Selon un autre mode de réalisation de l'invention, l'organe de maintien comprenant une face d'attache à l'organe de liaison adjacente à deux faces latérales, la face d'attache et les faces latérales étant disposées dans des plans différents, l'organe de liaison est configuré pour fixer la réglette en regard de l'une des faces latérales dudit organe de maintien. Dans ce mode de réalisation, la réglette est déportée de l'ouverture longitudinale du montant. Ce mode de réalisation est particulièrement adapté pour monter le dispositif de pré-positionnement selon l'invention sur un montant profilé d'un faux-plafond. Dans cet aspect de l'invention, la réglette est fixée selon son axe longitudinal dans une direction parallèle au plan de la face d'attache, et ainsi parallèle à la paroi de fond du montant profilé. Notamment, l'organe de maintien comprend un corps fixé à ladite au moins une réglette depuis lequel s'étend, en particulier dans la direction longitudinale de ladite au moins une réglette, une patte fixée à la face d'attache de l'organe de maintien.

Le ou les gabarits sont destinés à être positionnés contre la paroi arrière d'une plaque de plâtre, c'est-à-dire la paroi en regard de l'intérieur de la cloison sèche ou du faux-plafond.

Selon un mode de réalisation, le ou les gabarits sont surmontés d'un joint apte à faire interface avec la paroi arrière de la plaque de plâtre. Ledit joint est disposé sur le pourtour du gabarit. Ledit joint peut être disposé au niveau du corps d'attache et/ou des ailes de fixation. Ce joint peut notamment comprendre une face libre adhésive afin d'être fixé à la paroi arrière de la plaque de plâtre. Le joint est notamment réalisé en caoutchouc. Le joint présente notamment une forme similaire à la face de coopération du gabarit.

L'invention concerne également une cloison sèche comprenant une ossature de montants profilés dont au moins un des montants est équipé d'un dispositif de pré-positionnement tel que décrit précédemment.

L'invention concerne également un faux-plafond comprenant une ossature de montants profilés dont au moins un des montants est équipé d'un dispositif de pré-positionnement tel que décrit précédemment.

L'invention concerne en outre une utilisation d'un dispositif de pré-positionnement tel que décrit précédemment pour monter une cloison sèche ou un faux-plafond.

L'invention concerne également une méthode de pré-positionnement d'une boîte d'encastrement dans une cloison sèche ou un faux-plafond à l'aide d'un dispositif de pré-positionnement tel que décrit précédemment, ladite cloison sèche ou ledit faux-plafond comprenant une ossature de montants profilés et ladite boîte d'encastrement étant destinée à être disposée à une position donnée par rapport à l'un desdits montants profilés, ladite méthode comprenant les étapes suivantes :
a) fixation d'un gabarit à ladite au moins une réglette selon les repères de fixation de ladite au moins une réglette afin de positionner ledit gabarit selon une première direction au niveau de la position donnée de la boîte d'encastrement selon cette première direction,
b) attache du dispositif de pré-positionnement audit montant profilé à l'aide de l'organe de maintien afin de positionner ledit gabarit selon une seconde direction au niveau de la position donnée de la boîte d'encastrement selon cette seconde direction, la première et la seconde direction étant perpendiculaire entre elles.

La première direction représente la position d'écartement de la boîte d'encastrement par rapport au montant profilé considéré de l'ossature de montants. La seconde direction représente quant à elle la position de la boîte d'encastrement selon la direction longitudinale dudit montant profilé.

L'invention concerne enfin une méthode de montage d'une cloison sèche ou d'un faux plafond, ladite cloison comprenant une ossature de montants profilés, ladite méthode comprenant les étapes suivantes :
a) pré-positionnement d'une ladite boîte d'encastrement à l'aide de la méthode décrite précédemment,
b) mise en place de la boîte d'encastrement dans la lumière du gabarit et fixation au gabarit, ladite boîte d'encastrement comprenant une cavité ouverte, ladite ouverture de la cavité étant positionnée en regard de l'extérieur de la cloison sèche ou du faux-plafond, ladite cavité comprenant en outre au moins un organe d'ouverture monté dans la paroi de ladite cavité,
c) passage de la filerie au niveau de cavité de la boîte d'encastrement par ledit au moins un organe d'ouverture et attache de ladite filerie à ladite cavité.

La filerie est composée d'un ou plusieurs fils électriques individuels ou d'un câble à plusieurs fils électriques et elle est notamment insérée dans une gaine électrique notamment en plastique. Ainsi, une gaine électrique entoure un ou plusieurs câbles/fils électriques en fonction de la ou des boîtes d'encastrement utilisées et est reliée à une ouverture prévue à cet effet de la boîte d'encastrement.

La méthode de montage selon l'invention comprend en amont la mise en place d'une ossature de montant profilés. Cette ossature comprend notamment des rails supérieurs et inférieurs horizontaux entre lesquels sont disposés des montants verticaux intermédiaires et périphériques. Au sein de cette ossature peut être disposé un isolant. L'ossature de montant sert de support pour la fixation de plaques de plâtre. Ainsi, lors d'une étape postérieure du montage de la cloison ou du faux-plafond, l'ossature sera recouverte de plaques de plâtre, ce qui fermera la cloison sèche ou le faux-plafond, comme il sera vu plus loin.

Ladite boîte d'encastrement peut être fixée à la lumière du gabarit par tout moyen. Notamment, ladite boîte d'encastrement comprend des étriers périphériques et est fixée à la lumière du gabarit par serrage des étriers. Lesdits étriers comprennent notamment une vis sans fin comprenant une tête et une tige sur laquelle est monté un organe de fixation pourvu d'un trou débouchant filé. La rotation de la vis sans fin entraine en mouvement de translation l'organe de fixation le long de la tige de la vis. Ledit organe de fixation peut être en métal ou en matériau plastique. L'organe de fixation peut être une lame pourvue de dents aptes à se planter dans une surface environnante à la boîte d'encastrement, en l'occurrence ici la lumière d'un gabarit.

L'attache de la filerie à la cavité de la boîte d'encastrement peut être réalisée par tout moyen, et notamment à l'aide d'une bande adhésive.

L'organe d'ouverture de la cavité de la boîte d'encastrement peut être une paroi amovible. Dans ce cas, le retrait de l'organe d'ouverture entraine l'apparition d'un trou dans la paroi de la cavité, par lequel la filerie peut être insérée.

Alternativement, l'organe d'ouverture peut être une paroi déformable, notamment en silicone, pourvue d'une lumière. Dans ce cas, lors du passage d'un câble ou d'une gaine de la filerie dans la lumière de l'organe d'ouverture, le diamètre de la lumière va s'agrandir et par action réciproque serrer la gaine ou le câble la traversant, permettant ainsi sa fixation et son maintien dans la cavité de la boîte d'encastrement sans besoin d'autres moyens.

L'étape c) peut en outre comprendre la réalisation d'un test électrique de la filerie. Ce test permet de repérer très tôt dans le montage de la cloison sèche ou du faux-plafond des problèmes d'alimentation électrique, et de les résoudre facilement sans besoin de démonter les parties déjà en place de la cloison ou du faux-plafond.

Selon un mode de réalisation préférée de l'invention, la méthode de montage comprend en outre les étapes suivantes :
d) collage d'un joint sur le pourtour du gabarit,
e) fermeture de la cloison sèche ou du faux-plafond par la mise en place de plaques de plâtre sur l'ossature de montants profilés, une desdites plaques de plâtre recouvrant le gabarit,
f) mise en place d'un appareillage électrique au niveau de la boîte d'encastrement par le percement d'un trou débouchant dans la plaque de plâtre recouvrant le gabarit, l'attache dudit appareillage électrique à la boîte d'encastrement et son branchement à la filerie.

L'étape d) assure une étanchéité de la jonction entre le gabarit et la plaque de plâtre le recouvrant. En effet, lors de la fermeture de la cloison sèche ou du faux-plafond, le joint par sa face libre va être mis au contact de la face arrière de la plaque de plâtre recouvrant le gabarit. Ce joint est serré en sandwich par le gabarit contre la face arrière de ladite plaque de plâtre lors de l'étape f) par l'attache de l'appareillage électrique à la boîte d'encastrement, comme il sera vu ci-après.

Le joint peut notamment comprendre une face libre adhésive. Son adhésivité assure un meilleur contact et une fixation avec la face arrière de la plaque de plâtre recouvrant le gabarit.

L'appareillage électrique peut notamment être un interrupteur, une prise ou un point lumineux. L'appareillage électrique comprend notamment un corps inséré dans la cavité de la boîte d'encastrement et d'un organe de fixation à la boîte d'encastrement. Le corps de l'appareillage électrique comprend des ailes périphériques s'appuyant contre la face avant de la plaque de plâtre recouvrant le gabarit, c'est-à-dire la face tournée vers l'extérieure de la cloison. L'organe de fixation est notamment composé de plusieurs vis vissées dans des ouvertures dédiées au niveau de la cavité de la boîte d'encastrement. Ainsi, lors de l'attache de l'appareillage électrique à la boîte d'encastrement, les ailes périphériques sont rapprochées de la face avant de la plaque de plâtre recouvrant le gabarit. Lors du contact avec la face avant, les tours de vis supplémentaires vont entrainer un écrasement du joint par le gabarit contre la face arrière de la plaque de plâtre le recouvrant, par l'entrainement de la boîte d'encastrement et du gabarit liés ensemble en direction du dispositif électrique. Cet écrasement assure une bonne étanchéité de la jonction entre le gabarit et la plaque de plâtre ainsi qu'un bon maintien en position de l'appareillage électrique.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue de profil d'un dispositif de pré-positionnement selon un premier mode de réalisation l'invention ;
[Fig. 2] la figure 2 est une vue de profil d'un dispositif de pré-positionnement selon un second mode de réalisation l'invention ;
[Fig. 3] la figure 3 est une vue en coupe d'un dispositif de pré-positionnement selon l'invention disposé contre une plaque de plâtre d'une cloison sèche ou d'un faux plafond et sur lequel est monté une boîte d'encastrement ;
[Fig. 4] la figure 4 est une vue en coupe d'une cloison sèche dans laquelle un appareillage électrique est fixé dans une boîte d'encastrement à l'aide d'un dispositif de pré-positionnement selon l'invention ;
[Fig. 5] la figure 5 est un ensemble de vues (5a à 5d) représentant une cinématique de montage d'une cloison sèche comprenant une boîte d'encastrement pré-positionnée à l'aide du dispositif de pré-positionnement selon le premier mode de réalisation l'invention.

### Description détaillée

Les termes « avant » et « arrière » sont ici entendus selon l'orientation des éléments une fois montés dans une cloison sèche ou un faux-plafond. Ainsi, on entend par « avant » ce qui est en regard de l'extérieur de la cloison sèche ou du faux-plafond et par « arrière » ce qui est en regard de l'intérieur de la cloison sèche ou du faux-plafond.

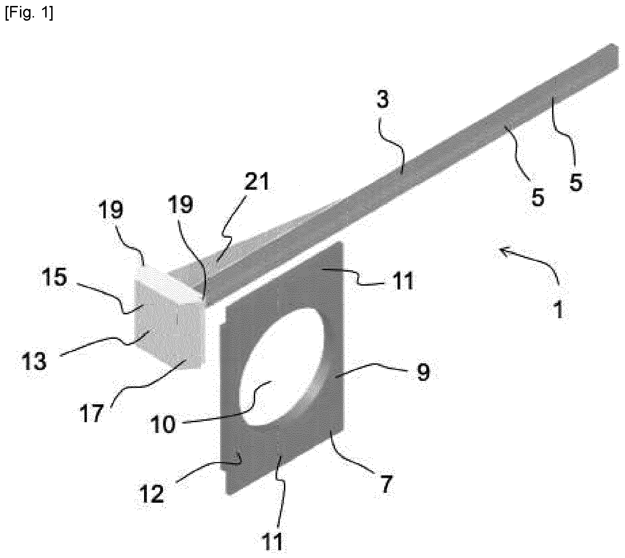

On se tournera en premier lieu vers la figure 1 qui représente un premier mode de réalisation d'un dispositif de pré-positionnement 1 d'une ou de plusieurs boîtes d'encastrement préférentiellement dans une cloison sèche. Le dispositif de pré-positionnement 1 comprend au moins une réglette 3. Dans le mode de réalisation représenté, une seule réglette 3 est présente. La réglette 3 est ici sous la forme d'un parallélépipède rectangle, mais elle peut prendre n'importe quelle forme. Cette réglette 3 est pourvue de repères de fixation 5, ici des orifices disposés le long de sa direction longitudinale. La réglette 3 permet de disposer et d'y fixer un ou plusieurs gabarits 7 selon sa direction longitudinale par rapport aux repères de fixation 5. Un seul gabarit 7 est représenté sur cette figure, mais on comprend aisément que plusieurs pourraient être mise en place le long de la réglette 3. Pour une meilleure visibilité de la figure, le gabarit 7 n'est pas représenté fixé à la réglette 3. Le gabarit comprend un organe de fixation (non visible) pour sa fixation à la réglette. Dans le mode de réalisation représenté, l'organe de fixation se présente sous la forme de pions dimensionnés pour s'insérer dans les orifices de la réglette et y retenir le gabarit par forces de friction.

Le gabarit comprend un corps d'attache 9 duquel s'étend au moins une aile de fixation 11 pour sa fixation à la réglette 3. Ladite au moins une aile de fixation 11 porte l'organe de fixation. Le corps d'attache 9 est percé d'une lumière 10 configurée pour recevoir une boîte d'encastrement qui y sera fixée. Le corps d'attache 9 et les ailes de fixation 11 comprennent une face de coopération 12 avec une plaque de plâtre.

Dans le mode de réalisation représenté, la lumière 10 du corps d'attache 9 a une forme de disque mais elle pourrait prendre n'importe quelle forme apte à recevoir une boîte d'encastrement. Notamment, elle pourrait avoir une forme oblongue. En outre, le gabarit peut être surmonté d'un joint pour sa coopération avec une plaque de plâtre d'une cloison sèche.

Le dispositif de pré-positionnement 1 comprend en outre un organe de maintien 13 destiné à coopérer avec un montant profilé mis en place pour le montage d'une cloison sèche. Dans le mode de réalisation représenté, l'organe de maintien 13 se présente sous la forme d'un coulisseau apte à se déplacer dans ledit montant profilé. Ledit coulisseau 13 comprend une face cachée 15 destinée à être positionnée en regard d'une paroi de fond d'un montant profilé dans lequel le coulisseau sera monté, une face d'attache (non visible) à la réglette 3 et deux faces latérales 17 configurées pour permettre un déplacement translationnel du coulisseau 13 dans le montant profilé. Dans le mode de réalisation représenté, les faces latérales 17 sont pourvues chacune d'un rail de guidage 19 apte à coopérer avec faces latérales du montant. Les rails de guidage 19 sont dimensionnés pour permettre un déplacement translationnel et une fixation par force de friction du coulisseau 13 dans le montant profilé.

Dans le mode de réalisation représenté, la réglette 3 est fixée à la face d'attache du coulisseau et cette fixation est renforcée par un organe de liaison 21 fixé à la réglette 3 et au coulisseau 13. La fixation de la réglette 3 est ici réalisée de manière à ce que son axe longitudinal soit perpendiculaire à la face d'attache du coulisseau 13. L'organe de liaison 21 a ici une forme de prisme triangulaire droit dont une face est fixée à la réglette et une autre face perpendiculaire est fixée à la face d'attache du coulisseau 13.

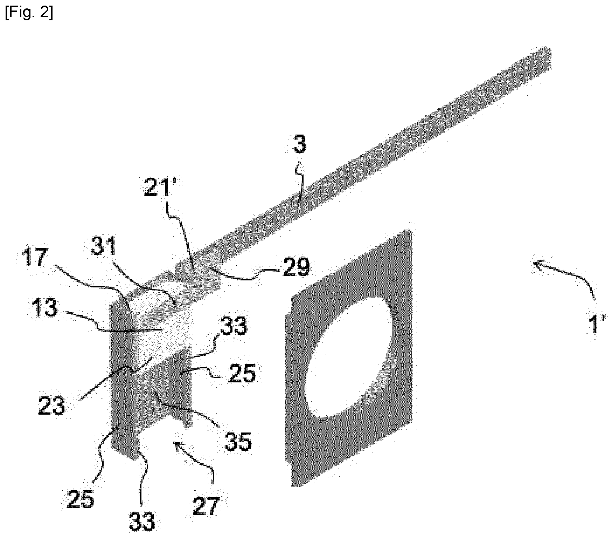

On se tournera à présent vers la figure 2 qui représente un second mode de réalisation d'un dispositif de pré-positionnement 1' selon l'invention préférentiellement adapté pour les boîtes d'encastrement montées dans des faux-plafonds. Ce second mode de réalisation correspond en tout point au premier décrit ci-dessus hormis l'organe de liaison 21' et l'orientation de la réglette 3 par rapport au coulisseau 13. Ici, l'organe de liaison 21' est configuré pour déporter la réglette 3 de la face d'attache 23 du coulisseau 13. L'axe longitudinal de la réglette 3 est disposé parallèlement à la face d'attache 23 du coulisseau 13. La réglette 3 est ici disposée en regard de l'une des faces latérales 17 du coulisseau et plus particulièrement de l'une des parois latérales 25 du montant profilé 27. A cet effet, l'organe de liaison 21' comprend un corps 29 duquel s'étend, parallèlement au plan de la face d'attache 23 du coulisseau 13, une patte de liaison 31 à la face d'attache 23 du coulisseau 13.

Sur la représentation de ce mode de réalisation, on aperçoit de manière plus claire la coopération entre les faces latérales 17 du coulisseau et les parois latérales 25 du montant profilé 27. On remarque les parois latérales 25 du montant profilé 27 présentent un bord relevé 33 disposé dans un plan parallèle à la paroi de fond 35. Les bords relevés 33 sont insérés dans les rails de guidage 19 des faces latérales 15 du coulisseau 13.

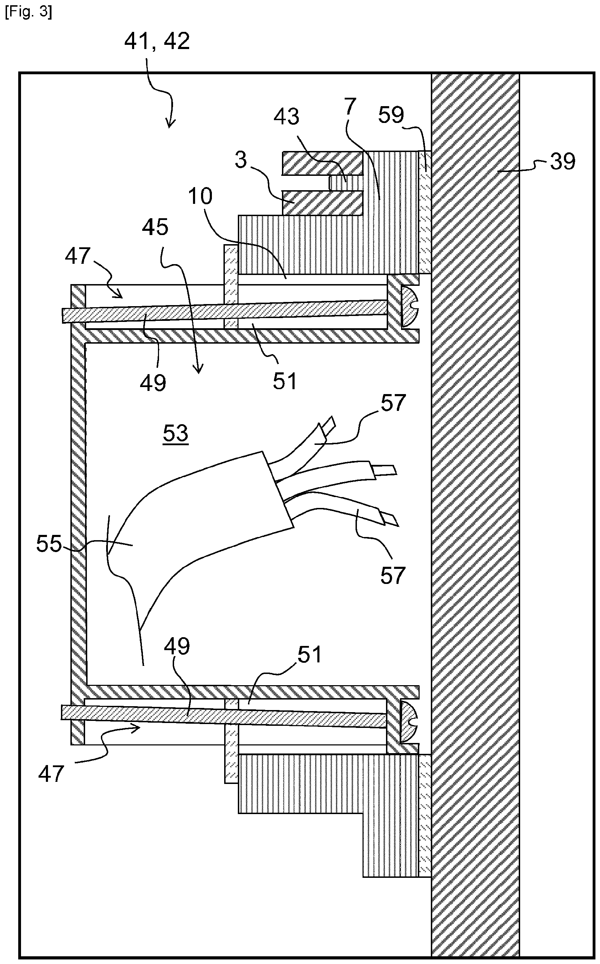

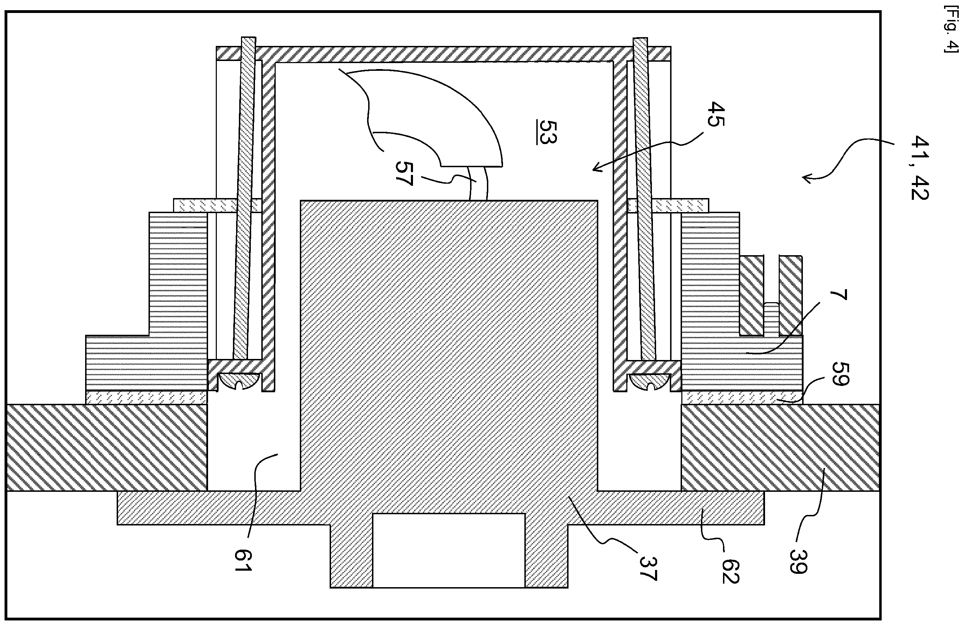

On se tournera pour la suite vers les figures 3 et 4 qui sont deux vues en coupe représentant deux étapes successives de la mise en place d'un appareillage électrique 37 au niveau d'une plaque de plâtre 39 d'une cloison sèche 41 ou d'un faux-plafond 42 à l'aide d'un dispositif de pré-positionnement 1 selon l'invention. La figure 3 représente une situation avant le perçage de la plaque de plâtre 39 et la mise en place de l'appareillage électrique 37. La figure 4 représente une situation après perçage de la plaque de plâtre 39 et mise en place de l'appareillage électrique 37.

Sur la figure 3, on remarque la réglette 3 à laquelle est fixé un gabarit 7 à l'aide de pions 43. La lumière 10 du gabarit 7 est comblée en partie ici par une boîte d'encastrement 45 qui y est fixée. A cet effet, la boîte d'encastrement 45 est pourvue d'étriers 47. Chaque étrier 47 comprend une vis sans fin 49 sur laquelle est montée un organe de fixation 51, ici sous la forme d'une lame. La lame 51 se déplace le long de la tige de la vis sans fin 49 afin de rencontrer la face arrière du gabarit et d'y exercer une force de pression pour y fixer la boîte d'encastrement 45.

La boîte d'encastrement 45 comprend une cavité 53 au sein de laquelle on peut voir une gaine 55 assemblant trois fils électriques 57. La gaine 55 est insérée dans la cavité 53 à l'aide d'un organe d'ouverture (non visible) aménagé dans la paroi de la boîte d'encastrement 45. Le maintien en position dans la cavité 53 de la gaine 55 est assuré par tout moyen et notamment par l'organe d'ouverture.

Le gabarit 7 est surmonté d'un joint 59 qui fait la jonction avec la plaque de plâtre 39. Le joint 59 permet d'étanchéifier la liaison du gabarit 7 à la plaque de plâtre 39. Le joint 59 peut être collé sur la face de coopération (face avant) du corps et des ailes du gabarit et peut présenter une face adhésive pour sa fixation à la face arrière de la plaque de plâtre 39. Le joint 59 peut aussi être maintenu par simple serrage.

Sur la figure 4, qui représente une situation postérieure à celle de la figure 3, la plaque de plâtre 39 a été percée et un trou débouchant 61 y est présent. Ce trou débouchant 61 présente ici les dimensions de la face de la boîte d'encastrement 45 tournée vers l'extérieur de la cloison sèche 41 ou du faux-plafond 42, mais il peut prendre n'importe quelle dimension permettant l'insertion d'un appareillage électrique 37 dans la cavité 53 de la boîte d'encastrement 45 ainsi que le repos de cet appareillage 37 par son pourtour 62 contre la plaque de plâtre 39.

En effet, l'appareillage électrique 37 est fixé à la boite d'encastrement 45, notamment par vissage, de sorte à ce que son pourtour 62 s'appuie sur la plaque de plâtre 37. La longueur des vis permettant de fixer l'appareillage électrique à la boîte d'encastrement sera bien entendu adaptée en fonction de la profondeur à laquelle se trouve la boîte d'encastrement. Ainsi, l'appareillage électrique 37, la boîte d'encastrement 45 et le gabarit 7 étant solidarisés entre eux, notamment par les vis de l'appareillage électrique et les étriers de la boîte d'encastrement, le gabarit 7 exerce une pression sur le joint 59, assurant l'étanchéité de la jonction et un bon maintien en position de l'appareillage électrique 37. Le branchement des fils électriques 57 à l'appareillage 37 assure son alimentation. Dans le cas d'une cloison sèche, l'appareillage électrique peut être un interrupteur ou une prise. Dans le cas d'un faux-plafond, l'appareillage électrique est notamment un point lumineux.

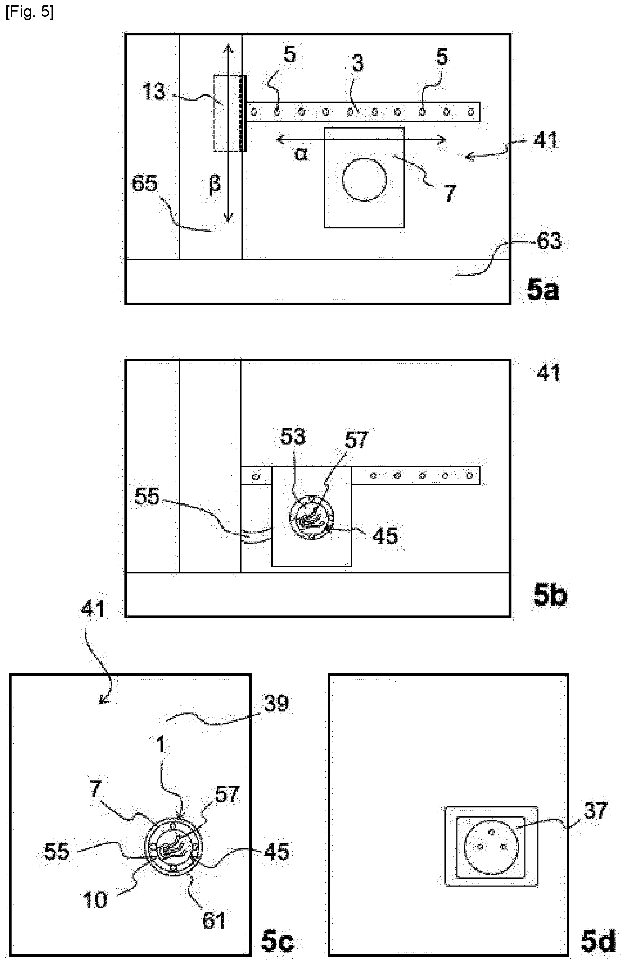

On se tournera enfin vers la figure 5 qui représente une cinématique de montage d'une cloison sèche 41 dans laquelle un appareillage électrique 37 est mis en place au niveau d'une plaque de plâtre 39.

Sur la figure 5a, on peut voir un rail inférieur 63 et un montant profilé intermédiaire 65 faisant partie d'une ossature de montants profilés de la cloison sèche 41. Sur le montant intermédiaire 65 est positionné un dispositif de pré-positionnement 1 selon le premier mode de réalisation de l'invention. Le gabarit 7 n'est ici pas encore fixé sur la réglette 3. Le gabarit 7 va être positionné selon la position à laquelle une boîte d'encastrement recevant l'appareillage électrique 37 doit être disposée au niveau de la plaque de plâtre et ainsi par rapport au montant intermédiaire 65. A cette fin, le gabarit 7 va être positionné selon une première direction α selon les repères de fixation 5 de la réglette 3. Une fois mise en place et fixé à la réglette 3, le gabarit 7 va être positionné selon une seconde direction β selon la position de l'organe de maintien 13 (visible en pointillé par transparence) au montant profilé intermédiaire 65. Ici, l'organe de maintien 13 étant un coulisseau de sorte qu'il suffit de le déplacer en translation le long du montant profilé intermédiaire 65 pour ajuster la position du gabarit 7 selon la seconde direction β. La première et la seconde direction sont perpendiculaires entre elles.

Sur la figure 5b, le gabarit 7 étant dans la bonne position, une boîte d'encastrement 45 y a été insérée et fixée. Une gaine 55 enserrant des fils électriques 57 a été insérée dans la cavité 53 par l'intermédiaire d'un organe d'ouverture disposé au niveau de la paroi de cette cavité 53. Lors de cette étape, un test d'alimentation électrique peut être réalisé afin de s'assurer du fonctionnement du futur appareillage électrique.

Sur la figure 5c, des plaques de plâtre ont été montées sur les montants afin de fermer la cloison sèche 41. Une des plaques de plâtre 39 recouvre le dispositif de pré-positionnement 1 selon l'invention. Dans cette plaque de plâtre 39 a été percé un trou débouchant 61 au travers duquel on aperçoit les bords de la lumière 10 du gabarit 7, la boîte d'encastrement 45, la gaine 55 et les fils électriques 57.

Enfin, sur la figure 5d, un appareillage électrique 37, en l'occurrence une prise électrique, a été monté sur la boîte d'encastrement et branché au câble électrique.

On comprend donc que la présente invention permet de faciliter le raccordement électrique des appareillages électriques en pré-positionnant les boîtes d'encastrement et la filerie avant même la mise en place des plaques de plâtre et la fermeture de la cloison sèche. Ce pré-positionnement, en plus d'assurer la présence des câbles électriques lors du montage des appareillages électriques, permet de tester en amont le bon fonctionnement de l'installation électrique, évitant des désagréments futurs et de lourds travaux de prospection et de réparation.

## Revendications

1. Dispositif de pré-positionnement (1) d'une ou de plusieurs boîtes d'encastrement (45) dans une cloison sèche (41) ou un faux-plafond (42), comprenant au moins une réglette (3), au moins un gabarit (7) et un organe de maintien (13) destiné à coopérer avec un montant profilé (25, 63, 65) mis en place pour le montage de la cloison sèche (41) ou du faux-plafond (42), ladite réglette (3) étant pourvue de repères de fixation (5) dudit au moins un gabarit (7), ledit au moins un gabarit (7) comprenant une lumière (10) configurée pour recevoir une boîte d'encastrement (45) et comprenant un organe de fixation (43) à ladite au moins une réglette (3).

2. Dispositif de pré-positionnement (1) selon la revendication 1, dans lequel l'organe de fixation (43) dudit au moins un gabarit (7) se présente sous la forme de pions (43) insérés dans des orifices (5) de ladite au moins une réglette (3).

3. Dispositif de pré-positionnement selon la revendication 1 ou 2, dans lequel l'organe de maintien (13) est un coulisseau (13) déplaçable en translation dans le montant profilé (25, 63, 65).

4. Dispositif de pré-positionnement selon la revendication 3, dans lequel le coulisseau (13) comprend deux faces latérales (15) pourvues chacune d'un rail de guidage (19) disposé dans le sens du mouvement de translation.

5. Dispositif de pré-positionnement (1, 1') selon l'une des revendications 1 à 4, comprenant en outre un organe de liaison (21, 21') de ladite au moins une réglette (3) à l'organe de maintien (13).

6. Dispositif de pré-positionnement (1) selon la revendication 5, l'organe de maintien (13) comprenant une face d'attache (23) à l'organe de liaison (21), dans lequel l'organe de liaison (21) est configuré pour fixer ladite au moins une réglette (3) en regard de la face d'attache (23) de l'organe de liaison (13), de préférence l'organe de liaison (21) est sous la forme d'un prisme triangulaire droit.

7. Dispositif de pré-positionnement (1') selon la revendication 5, l'organe de maintien (13) comprenant une face d'attache (23) à l'organe de liaison (21') adjacente à deux faces latérales (15), la face d'attache (23) et les faces latérales (15) étant disposées dans des plans différents, dans lequel l'organe de liaison (21') est configuré pour fixer la réglette (3) en regard de l'une des faces latérales (15) dudit organe de maintien (13), de préférence l'organe de maintien (13) comprend un corps (29) fixé à ladite au moins une réglette (3) depuis lequel s'étend une patte (31) fixée à la face d'attache (23) de l'organe de maintien (13).

8. Cloison sèche (41) comprenant une ossature de montants profilés (25, 63, 65) dont au moins un des montants (25, 63, 65) est équipé d'un dispositif (1, 1') selon l'une des revendications 1 à 7.

9. Faux-plafond (42) comprenant une ossature de montants profilés (25, 63, 65) dont au moins un des montants (25, 63, 65) est équipé d'un dispositif (1, 1') de pré-positionnement selon l'une des revendications 1 à 7.

10. Méthode de pré-positionnement d'une boîte d'encastrement (45) dans une cloison sèche (41) ou un faux-plafond (42) à l'aide d'un dispositif (1, 1') selon l'une des revendications 1 à 7, ladite cloison sèche (41) ou ledit faux-plafond (42) comprenant une ossature de montants profilés (25, 63, 65) et ladite boîte d'encastrement (45) étant destinée à être disposée à une position donnée par rapport à l'un desdits montants (25, 63, 65), ladite méthode comprenant les étapes suivantes :
a) fixation d'un gabarit (7) à ladite au moins une réglette (3) selon les repères de fixation (5) de ladite au moins une réglette (3) afin de positionner ledit gabarit (7) selon une première direction (α) au niveau de la position donnée de la boîte d'encastrement (45) selon cette première direction (α),
b) attache du dispositif de pré-positionnement (1) audit montant profilé (25, 63, 65) à l'aide de l'organe de maintien (13) afin de positionner ledit gabarit (7) selon une seconde direction (β) au niveau de la position donnée de la boîte d'encastrement (45) selon cette seconde direction (β), la première (α) et la seconde (β) direction étant perpendiculaire entre elles.

11. Méthode de montage d'une cloison sèche (41) ou un faux-plafond (42), ladite cloison sèche (41) ou le faux-plafond (42) comprenant une ossature de montants profilés (25, 63, 65), ladite méthode comprenant les étapes suivantes :
a) pré-positionnement d'une ladite boîte d'encastrement (45) à l'aide de la méthode selon la revendication 10, ladite boîte d'encastrement (45) comprenant des étriers (47) périphériques pour sa fixation,
b) mise en place de la boîte d'encastrement (45) dans la lumière (10) du gabarit (7) et fixation au gabarit (7), ladite boîte d'encastrement (45) comprenant une cavité ouverte (53), ladite ouverture de la cavité (53) étant positionnée en regard de l'extérieur de la cloison sèche (41) ou du faux plafond (42), ladite cavité (53) comprenant en outre au moins un organe d'ouverture monté dans la paroi de ladite cavité (53),
c) passage d'une filerie au niveau de cavité (53) de la boîte d'encastrement (45) par ledit au moins un organe d'ouverture et attache de ladite filerie à ladite cavité (53).

12. Méthode de montage d'une cloison sèche (41) ou un faux-plafond (42) selon la revendication 11, comprenant en outre les étapes suivantes :
d) collage d'un joint (59) sur le pourtour du gabarit (7),
e) fermeture de la cloison sèche (41) ou du faux plafond (42) par la mise en place de plaques de plâtre sur l'ossature de montants profilés (25, 63, 65), une desdites plaques de plâtre (39) recouvrant le gabarit,
f) mise en place d'un appareillage électrique (37) au niveau de la boîte d'encastrement (45) par le percement d'un trou débouchant (61) dans la plaque de plâtre (39) recouvrant le gabarit (7), l'attache dudit appareillage électrique (37) à la boîte d'encastrement (45) et son branchement à la filerie.
